# EUROPEAN PATENT APPLICATION

(11) **EP 3 112 722 A1**
(43) Date of publication of application: **04.01.2017**
(21) Application number: 16171384.7
(22) Date of filing: 25.05.2016
(51) Int. Cl.: F16G 11/00, F16G 11/14

(54) **A SOCKET FOR SECURING A ROPE WITH A LOOPED END TO A SUPPORT MEMBER, A COMBINATION OF SUCH A SOCKET WITH A ROPE, AND A METHOD FOR MAKING THE COMBINATION**

(30) Priority: 02.07.2015 DK 201500376
(71) Applicant: Blue Wave A/S, 6100 Haderslev (DK)
(72) Inventor: HASBO, Michael, 6100 Haderslev (DK); ASMUSSEN, Peter, 6100 Haderslev (DK)
(74) Representative: Zacco Denmark A/S

(57) **Abstract**

The invention relates to a socket (10) for securing a rope (5) with a looped end (6) to a support member, said socket (10) comprising a connector (20), preferably having an aperture (22), for anchoring said socket (10) to said support member, a sleeve (40) with a through-going passage (46), and a plug (30) having a surface groove (32) for receiving therein said looped end (6), said sleeve (40) having a connector end (41) for connection with said connector (20), a first opening (42) into said through-going passage (46) at said connector end (41), and an opposite rope end (44) with a second opening (45) into said through-going passage (46) being for said rope (5) to extend from said through-going passage (46), and a seat (52) for said plug (30), located inside said through-going passage (46) at said rope end (44), said through-going passage (46) being sized to receive said plug (30) and for said plug (30) to be movable into said sleeve (40) through said first opening (42) and towards said seat (52).

## Description

The present invention relates to rope connections and has for its object to provide a structure which may be easily assembled to securely grip the end of the rope. In particular, the present invention provides a maritime rigging hardware useful for anchoring rigging ropes to deck fitting.

Wire terminals in many variations are known where the wire strands are split apart following which a wedged-shaped member is inserted into a sleeve between the strands, see US patents 3,100,924 and 4,464,812. Such known solutions are normally for steel stranded cables and not suitable for ropes of other material, such as of natural or synthetic fibres, which may easily be damaged by high local compressive forces.

The present invention aims at providing a rope terminal highly suitable for ropes, and this by the socket defined in claim 1, the combination of claim 7, and the method of claim 9.

### Brief description of the drawings

Embodiments of the invention will now be discussed in details, with reference to the drawings, of which
Fig. 1 schematically in perspective view shows a combination comprising a socket of the invention and a portion of a looped end rope,
Fig. 2 is a side view of the components of the socket of the invention,
Fig. 3a is a cross-sectional view of the socket of the invention, with a rope illustrated schematically only,
Fig. 3b shows a plug of the socket, seen from the side,
Fig. 4 and 5 shows the method steps of making the combination of fig. 1,
Fig. 6 shows an alternative plug, in perspective view, and
Fig. 7 shows a typical step when splicing a stranded rope to form a loop.

### Detailed description

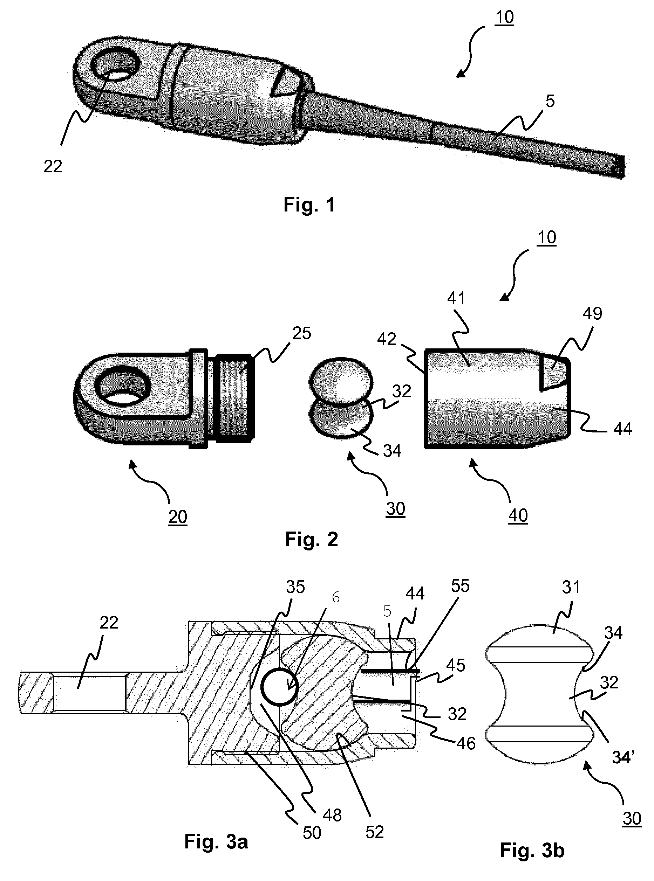

Fig. 1 shows a combination comprising a socket 10 of the invention and a portion of rope 5 which has a looped end (not visible) held inside the socket 10. The socket 10 has an eye or aperture 22 whereby the socket 10 conveniently may be anchored to a deck fitting (not shown) or other anchor. The rope 5 is that designated in the trade as a spliceable stranded rope, such as a Dyneema rope. It is to be understood that the invention is adaptable to other forms of ropes capable of being spliced to form an end loop, preferably stranded ropes of natural or synthetic fibres.

Fig. 2 is a side view of the components of the socket 10 of the embodiment of the invention. The socket 10 includes a single piece connector 20 with exterior thread 25, a single piece plug 30, and a single piece sleeve 40 having a through-going passage there-through. The sleeve 40 has a connector end 41 with a first opening 42 and a rope end 44 with a second opening. The sleeve 40 has a cylindrical portion followed by an exteriorly tapered portion defining the rope end 44, as shown, with the exteriorly tapered portion having opposite flattened portions 49 suitable for engagement with a spanner/wrench.

At the connector end 41 the sleeve has interior thread 50 for a short distance, as seen best in fig. 3a where the threaded part of the connector 20 is shown screwed fully into the sleeve 40, followed by a constant interior diameter portion, followed by curving portion defining a seat 52 for the aforementioned plug 30 and being contiguous with a constant inner diameter portion 55 at the rope end 44.

Positionable interiorly of the sleeve 40 and used as a part of the socket 10 is the plug generally designated by the numeral 30, see fig. 3b. When the connector 20 and the sleeve 40 are fully connected as shown in fig. 3a a space 48 is preferably provided between the plug 30 and the end of the connector 20, which end carries the thread 25. Preferably this end of the connector 20 defines a bowl-shaped hollow 35 with a flat bottom.

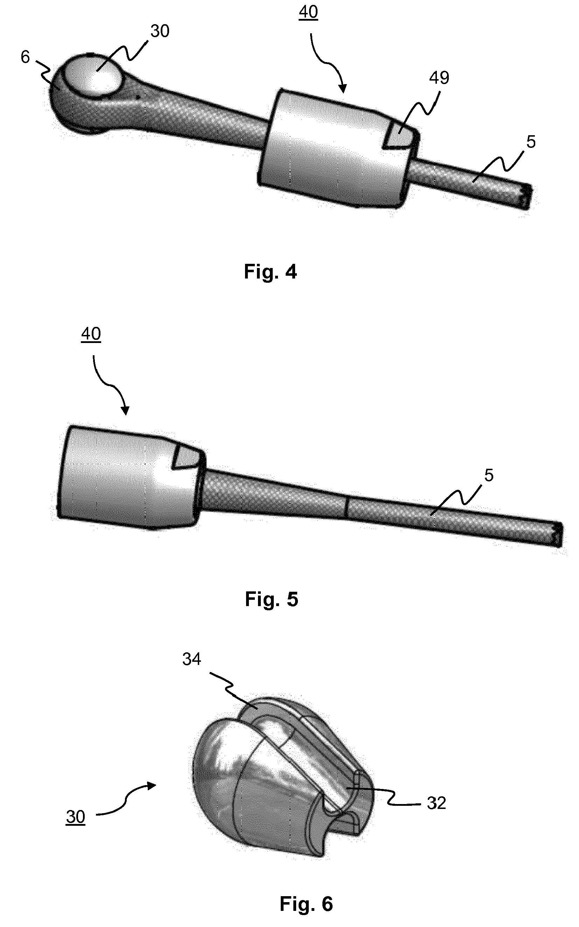

The plug 30 is an originally spherical metal body, machined to have in its surface a roundgoing concave recess or groove 32, preferably with the bottom thereof following a great circle of the originally spherical plug 30. As shown in figs. 3a and 4, a looped end 6 of the rope 5 is formed by splicing the rope end, with the loop running around the plug 30 in the groove 32, within the contour of the plug. The splicing may be done in any conventional manner, such as where an end portion of the rope 5 is first backfolded with the free end thereof being passed through and intertwined between the strands of the rope 5. The loop 6 should be so small that the plug 30 is held in place and not readily removable from the loop by opposite walls 34 defining the groove 32 being engageable with the rope 5.

It will be understood that the seat 52 is preferably shaped so as to be complementary with the external face of the plug 30 such that when the looped rope 5 carrying the plug 30 is pulled through the through-going passage 46 of the sleeve 40 from the position shown in fig. 4 to the position shown in fig. 5 the plug 30 will rest against the seat 52, as shown in fig. 3a. In this position the groove 32 is aligned with the rope end 45 of the sleeve 40 and the rope 5 will extend from the sleeve 40 at a second opening 45 of the sleeve 40; at the same time the connector 20 is screwed fully into the sleeve 40 until the connector end 41 contacts a flange of the connector 20, as shown in figs. 1 and 3a. By the seat 52 preferably being defined by an axis of rotation the looped end rope 5 shown in fig. 4 may be pulled into the position shown in fig. 5 without the need to twist the rope 5, and in the configuration shown in fig. 1 the rope 5 may be twisted along its length by more than 360° relative to the socket 10 without the plug 30 resisting this rotation.

The socket 10 may be designed to accommodate for a particular range of ropes 5, i.e. ropes 5 having a thickness/diameter within a certain range; for thinner ropes within a range this means the rope 5 may not fill out the full depth of the groove 32. A socket 20 and plug 30 should be selected ensuring that the rope 5 does not extend beyond the contour of the plug 30 which would mean the surface of the rope 5 and not the plug 30 would be in contact with the seat 52 in use, bringing about undesired local forces/pressure against the rope 5 strands. By having a smooth surface seat 52 and/or preferably allowing for some small movement of the plug 5 with the looped end 6 along the length of the through-going passage 46 when the socket 10 is assembled with the rope, as shown in fig. 1, freer rotation of the rope about its longitudinal axis is enabled, which may be desired up to the point where the rope 5 is put under tension.

Fig. 6 shows an alternative plug formed with a conical portion suitable where the seat 52 has a conical outline, and with the groove 32 defined again preferably by a concave surface, preferably with planes sides 34 extending to the outer contour of the plug 30, and preferably with a head defined by a portion of the sphere.

While the connection between the sleeve 40 and the connector 20 is disclosed herein as being a screw thread connection other connecting means may be contemplated without departing from the invention, as long as operation of the engagement means provides for the sleeve 40 to be connected with the connector 20 at its end 41.

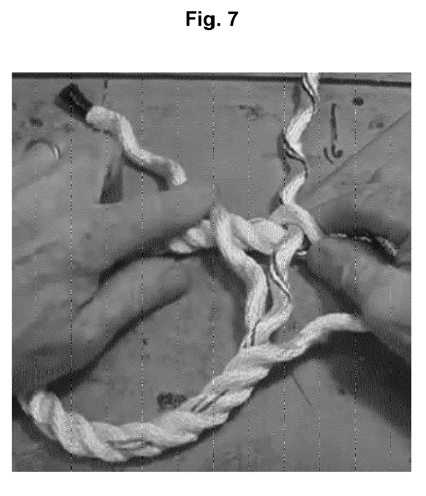

Fig. 7 shows a typical step when splicing a stranded rope to form a loop.

## Claims

1. A socket (10) for securing a rope (5) with a looped end (6) to a support member, said socket (10) comprising:
a connector (20), preferably having an aperture (22), for anchoring said socket (10) to said support member,
a sleeve (40) with a through-going passage (46), and
a plug (30) having a surface groove (32) for receiving therein said looped end (6),
- said sleeve (40) having
- - a connector end (41) for connection with said connector (20), a first opening (42) into said through-going passage (46) at said connector end (41), and an opposite rope end (44) with a second opening (45) into said through-going passage (46) being for said rope (5) to extend from said through-going passage (46), and
- - a seat (52) for said plug (30), located inside said through-going passage (46) at said rope end (44),
- said through-going passage (46) being sized to receive said plug (30) and for said plug (30) to be movable into said sleeve (40) through said first opening (42) and towards said seat (52).

2. The socket of claim 1, said plug (30) and said seat (52) having mating surfaces.

3. The socket of claim 1 or 2, said plug (30) being spherical, said groove (32) extending around said plug (30).

4. The socket of any of the previous claims, said seat (52) having a face, such as a rounded face, geometrically defined by rotation of a curve about an axis of rotation extending along said through-going passage (46).

5. The socket of any of the previous claims, said socket (10) being of aluminium or stainless steel.

6. The socket of any of the previous claims, said connection being through said sleeve (40) having an internal thread (50) configured for engaging an external thread (25) on said connector (20).

7. A socket and a rope (5) with looped end (6) combination, said socket (10) comprising:
a connector (20), preferably having an aperture (22), for anchoring said socket (10) to a support member,
a sleeve (40) with a through-going passage (46), and
a plug (30) with a surface groove (32) receiving therein said looped end (6),
- said sleeve (40) having
- - a connector end (41) for connection with said connector (20), a first opening (42) of said sleeve (40) at said connector end (41), and an opposite rope end (44) with a second opening (45), said rope (5) exiting from said through-going passage (46) through said second opening (45), and
- - a seat (52) for said plug (30), located inside said through-going passage (46) at said rope end (44),
- said through-going passage (46) being sized to receive said plug (30) with said looped end (6) received in said groove (32) and for said plug (30) to be movable into said sleeve (40) through said first opening (42) towards said seat (52).

8. The combination of claim 7, said plug (30) being spherical with said groove (32) extending around said plug (30).

9. A method of making the combination of claim 7 or 8, comprising the steps of:
i) splicing said rope (5) to form a looped end (6) with said looped end (6) received in said groove (32),
ii) before or after step i) passing said rope (5) into and partially through said through-going passage (46),
iii) moving said plug (30) with said looped end (6) towards said seat (52) inside said through-going passage (46), and
iv) securing said connector (20) to said sleeve (40).
